# EUROPEAN PATENT SPECIFICATION

(11) **EP 4 224 680 B1**
(45) Date of publication and mention of the grant of the patent: **14.10.2026**
(21) Application number: 22788440.0
(22) Date of filing: 13.04.2022
(51) Int. Cl.: H02K 5/04, H02K 7/00

(54) **MOTOR**
MOTOR
MOTEUR

(30) Priority: 15.04.2021 KR 20210049101
(43) Date of publication of application: 09.08.2023
(73) Proprietor: LG Innotek Co., Ltd., Seoul 07796 (KR)
(72) Inventor: PARK, Kyoung Min, Seoul 07796 (KR); KU, Ju Hwan, Seoul 07796 (KR); KIM, Jae Young, Seoul 07796 (KR)
(74) Representative: M. Zardi & Co S.A.
(86) International application number: PCT/KR2022/005358
(87) International publication number: WO 2022/220585

(56) References cited:
- JP-A- 2012 080 733
- JP-A- 2019 068 554
- JP-B2- 3 715 519
- KR-B1- 101 457 655
- KR-B1- 101 457 655
- KR-B1- 102 027 396
- KR-B1- 102 190 270
- US-A1- 2015 263 582

## Description

### [Technical Field]

An embodiment relates to a motor.

### [Background Art]

Generally, in a motor, a rotor rotates by an electromagnetic interaction between the rotor and a stator. In this case, a shaft connected to the rotor also rotates to generate a rotational driving force.

The rotor and the stator are accommodated in a housing. The housing may include a cylindrical hollow main body and a flange disposed on an end portion of the main body. The flange is coupled to an external apparatus. Since the flange is disposed to extend further outward than the main body, a joint between the main body and the flange has to have a substantially curved shape.

However, since such a shape of the housing is difficult to manufacture, there are problems that a manufacturing process is complex, and the cost increases. In addition, there is a problem of being vulnerable to an axial load.

JP2002084699A discloses a stator assembly stored in a frame, and the stator assembly covered with a mold layer made of synthetic resin.

### [Technical Problem]

Accordingly, an embodiment is intended to solve the above problems and directed to providing a motor which is easily manufactured and is robust against an axial load.

Objectives to be achieved by the present invention are not limited to the above-described objective, and other objectives which are not described above will be clearly understood by those skilled in the art through the following descriptions.

### [Technical Solution]

An embodiment provides a motor including a housing; a stator disposed in the housing; a rotor disposed in the stator; and a shaft coupled to the rotor, wherein the housing includes a first housing, the first housing includes a main body, a flange, and a joint disposed between the flange and the main body in an axial direction, the flange includes a plurality of holes, the joint includes first step parts and second step parts which protrude further outward than an outer surface of the main body in a radial direction, and the first step parts and the second step parts are symmetrically disposed with respect to a reference plane parallel to an axis of the motor and passing through a center of one of the holes and a center of the first housing, wherein shapes and sizes of the first step part and the second step part are the same, wherein the joint includes a protruding part, and the protruding part includes a convex region and a concave region which are continuously disposed in the radial direction and the concave region is disposed to correspond to the hole, and characterized in that the joint includes a sidewall which connects the first step parts and the second step parts to the flange; and the sidewall includes curved surfaces protruding toward the center of the first housing, wherein the curved surfaces are disposed to correspond to the holes, and wherein the sidewall comprises planar surfaces connecting two adjacent curved surfaces among the curved surfaces, and wherein the planar surfaces are recessed from the center of the first housing and are not co-planar with an inner surface of the main body.

### [Advantageous Effects]

According to an embodiment, there is an advantage of easily manufacturing a housing by applying a step structure to a joint connecting a flange and a main body.

According to the embodiment, there is an advantage of securing robustness against an axial load through a first step part and a second step part (ST2) symmetrically disposed in the joint.

According to the embodiment, there is an advantage of further improving the robustness against the axial load by attaching a second housing to a first housing.

According to the embodiment, there is an advantage of uniformly supporting the axial load by rotationally and symmetrically arranging a plurality of first step parts and a plurality of second step parts.

### [Description of Drawings]

FIG. 1 is a view illustrating a motor which is not an embodiment of the invention.
FIG. 2 is a perspective view of a first housing illustrated in FIG. 1.
FIG. 3 is a side cross-sectional view of the first housing taken along line A-A of FIG. 2.
FIG. 4 is a bottom view of the first housing illustrated in FIG. 1.
FIG. 5 is a plan view of the first housing illustrated in FIG. 1.
FIG. 6 is a view illustrating a state in which the first housing and a second housing are coupled.
FIG. 7 is a set of views for comparing a degree of deformation of a housing of a motor according to a comparative example against an axial load and a degree of deformation of a housing of the motor which is not an embodiment of the invention against an axial load.

### [Modes of the Invention]

A direction parallel to a longitudinal direction (vertical direction) of a shaft will be referred to as an axial direction, a direction perpendicular to the axial direction about the shaft will be referred to as a radial direction, and a direction along a circumference of a circle having a radius in the radial direction about the shaft will be referred to as a circumferential direction.

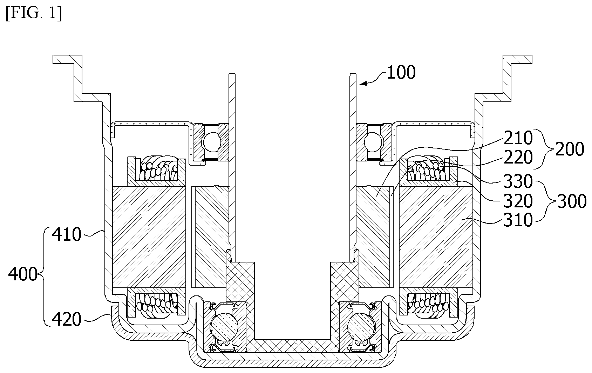

FIG. 1 is a view illustrating a motor which is not an embodiment of the invention.

Referring to FIG. 1, the motor according to the embodiment includes a shaft 100, a rotor 200, a stator 300, and a housing 400. Hereinafter, the term "inward" refers to a direction from the housing 400 toward the shaft 100 which is a center of the motor, and the term "outward" refers to a direction opposite to "inward," that is, the direction from the shaft 100 toward the housing 400. In addition, hereinafter, the radial direction is defined based on an axial center of the shaft 100.

The shaft 100 is coupled to the rotor 200. When a current is suppled so that an electromagnetic interaction occurs between the rotor 200 and the stator 300, the rotor 200 rotates, and the shaft 100 rotates in conjunction with the rotation of the rotor 200. The shaft 100 may be a hollow member. A shaft of an external apparatus may be inserted into the shaft 100.

The rotor 200 rotates through an electrical interaction with the stator 300. The rotor 200 is disposed inside the stator 300.

The stator 300 is disposed outside the rotor 200. The stator 300 may include a stator core 310, an insulator 320 mounted on the stator core 310, and a coil 330. The coil 330 may be wound around the insulator 320. The insulator 320 is disposed between the coil 330 and the stator core 310 to serve to electrically insulate the stator core 310 from the coil 330. The coil 330 induces an electrical interaction with a magnet of the rotor 200.

The housing 400 may include a first housing 410 and a second housing 420. The stator 300 and the rotor 200 are disposed inside the first housing 410. In addition, the second housing 420 is disposed to be attached to an outer surface of the first housing 410.

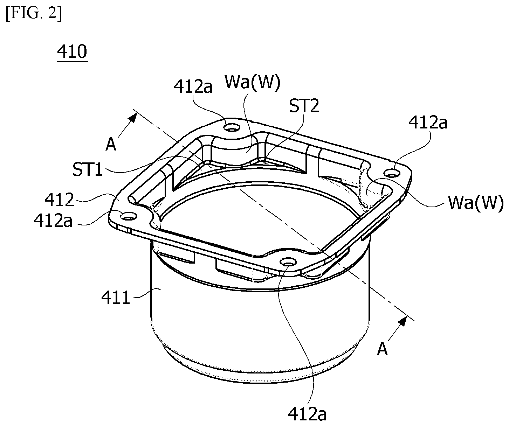

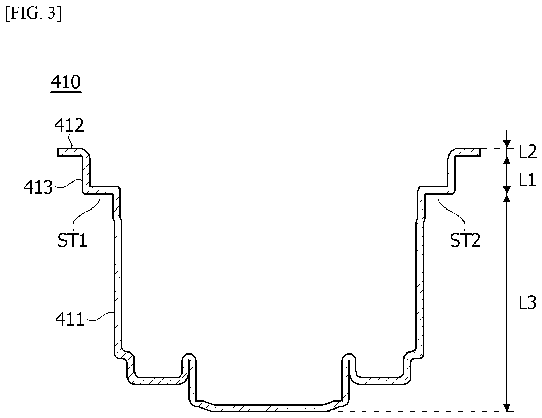

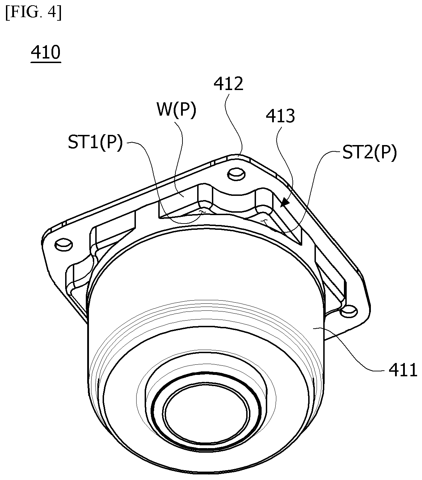

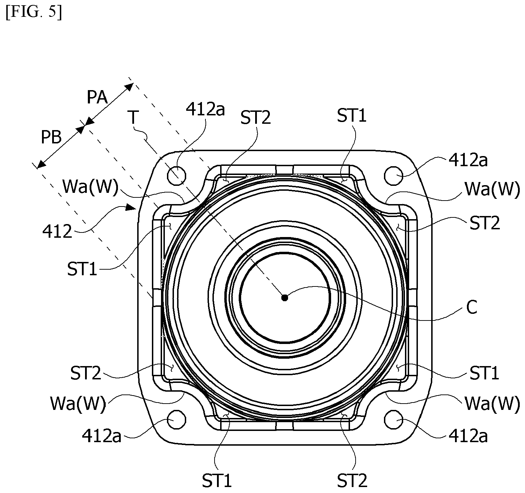

FIG. 2 is a perspective view of the first housing 410 illustrated in FIG. 1, FIG. 3 is a side cross-sectional view of the first housing 410 taken along line A-A of FIG. 2, FIG. 4 is a bottom view of the first housing 410 illustrated in FIG. 1, and FIG. 5 is a plan view of the first housing 410 illustrated in FIG. 1.

Referring to FIGS. 2 to 5, the first housing 410 includes a main body 411, a flange 412, and a joint 413.

The main body 411 is a cylindrical member and accommodates the rotor 200 and the stator 300 therein.

The flange 412 is disposed at an end portion of the main body 411 to be fastened with the external apparatus. The flange 412 is disposed to protrude further than the main body 411 in the radial direction. A plurality of holes 412a is disposed in the flange 412. Each of the holes 412a is a hole through which a fastening member passes. The flange 412 may have a substantially polygonal shape. The hole 412a may be disposed around a corner of the flange 412.

The joint 413 connects the main body 411 and the flange 412. The joint 413 is disposed between the main body 411 and the flange 412 in the axial direction. The joint 413 serves to improve robustness against an axial load. Particularly, when the shaft of the external apparatus is inserted into the shaft 100 and an axial load is applied to the housing 400, a connecting portion between the flange 412 and the main body 411 may be vulnerable to the axial load due to a structural difference between the flange 412 and the main body 411, but this may be supplemented through the joint 413 which will be described below.

The joint 413 includes a protruding part P protruding further than an outer surface of the main body 411 in the radial direction. The protruding part P is disposed around the hole 412a of the flange 412. In the protruding part P, a convex region PB and a concave region PA are continuously disposed in the radial direction. In this case, the concave region PA is disposed to correspond to the hole 412a.

A specific structure of the protruding part P will be described below.

The joint 413 includes a first step part ST1, a second step part ST2, and a sidewall as the protruding part P. The first step part ST1 and the second step part ST2 may be disposed on a plane perpendicular to axial direction at one end of the main body 411. The sidewall connects the first step part ST1 and second step part ST2 to the flange 412. The first step part ST1, the second step part ST2, and the sidewall W are formed to protrude further outward than the outer surface of the main body 411 in the radial direction.

The sidewall W is perpendicularly connected to the first step part ST1 and the second step part ST2.

The first step part ST1 and the second step part ST2 are disposed around the hole 412a of the flange 412. In addition, the first step part ST1 and the second step part ST2 are symmetrically disposed with respect to a reference plane T. The reference plane T corresponds to a virtual plane parallel to an axis of the motor and passing through a center of the hole 412a and a center C of the first housing 410. Since the first step part ST1 and the second step part ST2 are symmetrically disposed with respect to the hole 412a, a fastening space of the flange 412 is secured around the hole 412a and the robustness against the axial load can also be uniformly secured.

Shapes and sizes of the first step part ST1 and the second step part ST2 are the same.

The first step part ST1 and the second step part ST2 are disposed on the plane perpendicular to the axial direction and perpendicularly connected to the sidewall W connected to the flange 412. In addition, the first step part ST1 and the second step part ST2 are perpendicularly connected to the main body 411. The first step part ST1 and the second step part ST2 serve to improve the robustness against the axial load.

The first step part ST1 and the second step part are disposed as a plurality of first step parts ST1 and a plurality of second step parts ST2. The first step part ST1 and the second step part ST2 may be disposed as one set corresponding to the hole 412a disposed around the corner of the flange 412. Shapes and sizes of the plurality of first step parts ST1 are the same. The plurality of first step part ST1 may be rotationally and symmetrically disposed with respect to the center C of the first housing 410. In addition, shapes and sizes of the plurality of second step parts ST2 are also the same. The plurality of second step parts ST2 may be rotationally and symmetrically disposed with respect to the center C of the first housing 410.

The sidewall W includes a curved surface Wa. The curved surface Wa protrudes toward the center C of the first housing 410. The curved surface Wa is disposed to correspond to the hole 412a. The curved surface Wa is disposed as a plurality of curved surfaces Wa. The plurality of curved surfaces Wa may be rotationally and symmetrically disposed with respect to the center C of the first housing 410. Curvatures and sizes of the plurality of curved surfaces Wa may be the same. The curved surface Wa has features of securing a fastening space of the flange 412 at the outside of the main body 411 and improving robustness of the sidewall W against the axial load.

In the axial direction, an inner edge of the flange 412 may have a "W" shape around the curved surface Wa.

A length L1 of the joint 413 in the axial direction is greater than a length L2 of the flange 412 in the axial direction and smaller than a length L3 of the main body 411 in the axial direction.

As illustrated in FIG. 5, when viewed in the axial direction, a sum of an area of all the first step parts ST1 and an area of all the second step parts ST2 is smaller than a sum of an area of the flange 412. When the sum of the area of all the first step parts ST1 and the area of all the second step parts ST2 is greater than the area of the flange 412, the motor may be rather vulnerable to the axial load.

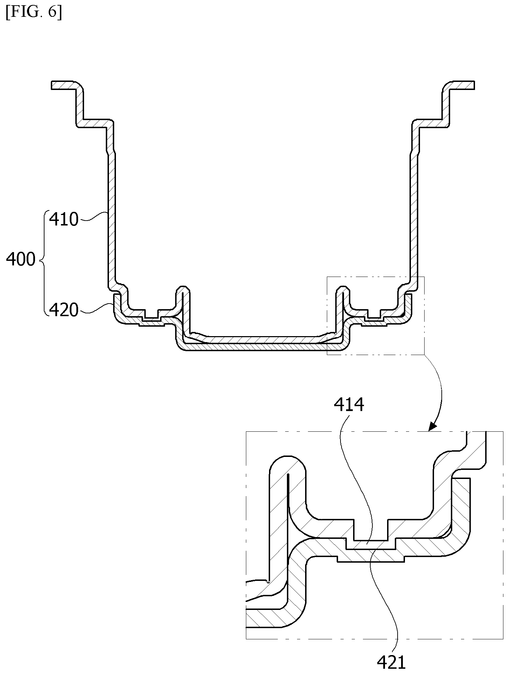

FIG. 6 is a view illustrating a state in which the first housing 410 and the second housing 400 are coupled.

Referring to FIG. 6, the second housing 420 may be disposed to be attached to a lower end portion of the first housing 410. The second housing 420 may be disposed to surround the lower end portion of the first housing 410. The lower end portion of the first housing 410 may be disposed as a multistage type for assembling with the second housing 420. The second housing 420 may be slid to be assembled with or fitted to the lower end portion of the first housing 410.

The first housing 410 may include a first coupling part 414 in a contact region between the first housing 410 and the second housing 420. In addition, the second housing 420 may include a second coupling part 421 coupled to the first coupling part 414.

The first coupling part 414 may be a protrusion and the second coupling part 421 may be a groove. The first coupling part 414 and the second coupling part 421 may be formed through a clinching process.

The second housing 420 supplements robustness against the axial load at the lower end portion of the first housing 410 to reduce deformation of the housing 400.

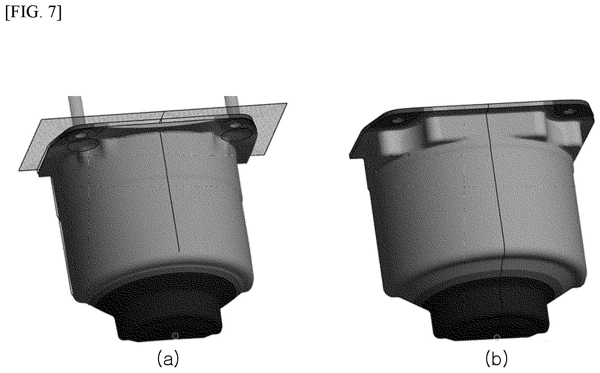

FIG. 7 is a set of views for comparing a degree of deformation of a housing of a motor according to a comparative example against an axial load and a degree of deformation of a housing of the motor according to the embodiment against an axial load.

In the same axial load condition, FIG. 7A is a view showing the degree of deformation of the housing of the motor against the axial load according to the comparative example and FIG. 7B is a view showing the degree of deformation of the housing of the motor against the axial load according to the embodiment. As can be seen visually, in the same axial load condition, it can be seen that larger deformation occurs around a flange of the housing of the motor according to the comparative example when compared to that according to the embodiment.

Specifically, as illustrated in FIG. 7A, the degree of deformation of the housing of the motor against the axial load according to the comparative example is that a change in a length of the housing in the axial direction is 0.129 mm in an axial load condition of 7000 N/m, however, as illustrated in FIG. 7B, the degree of deformation of the house of the motor against the axial load according to the embodiment is that a change in a length of the housing in the axial direction is 0.103 mm in the axial load condition of 7000 N/m, which shows that the robustness of the motor according to the embodiment is higher than the robustness of the motor according to the comparative example by about 20.15%.

In the above-described embodiment, an example of an inner rotor type motor has been described, but the present invention is not limited thereto. The present invention may also be applied to an outer rotor type motor. In addition, the present invention may be used in various devices for vehicles, home appliances, or the like.

## Claims

1. A motor comprising:
a housing (400);
a stator (300) disposed in the housing (400);
a rotor (200) disposed in the stator (300); and
a shaft (100) coupled to the rotor (200),
wherein the housing (400) includes a first housing (410),
the first housing (410) includes a main body (411), a flange (412), and a joint disposed between the flange (412) and the main body (411) in an axial direction,
the flange (412) includes a plurality of holes (412a),
the joint includes first step parts (ST1) and second step parts (ST2) which protrude further outward than an outer surface of the main body (411) in a radial direction, and
the first step parts (ST1) and the second step parts (ST2) are symmetrically disposed with respect to a reference plane (T) parallel to an axis of the motor and passing through a center of one of the holes (412a) and a center (C) of the first housing (410),
wherein shapes and sizes of the first step part (ST1) and the second step part (ST2) are the same,
wherein the joint includes a protruding part (P), and the protruding part (P) includes a convex region and a concave region which are continuously disposed in the radial direction and the concave region is disposed to correspond to the hole (412a), and
**characterized in that** the joint includes a sidewall (W) which connects the first step parts (ST1) and the second step parts (ST2) to the flange (412); and
the sidewall (W) includes curved surfaces protruding toward the center (C) of the first housing (410),
wherein the curved surfaces are disposed to correspond to the holes (412a), and
wherein the sidewall (W) comprises planar surfaces connecting two adjacent curved surfaces among the curved surfaces, and
wherein the planar surfaces are recessed from the center of the first housing (410) and are not co-planar with an inner surface of the main body (411).

2. The motor of claim 1, wherein the plurality of curved surfaces are rotationally and symmetrically disposed with respect to the center (C) of the first housing (410).

3. The motor of claim 1, wherein:
the plurality of first step parts (ST1) are rotationally and symmetrically disposed with respect to a center (C) of the housing (400); and
the plurality of second step parts (ST2) are rotationally and symmetrically disposed with respect to the center (C) of the housing (400).

4. The motor of claim 1, wherein the first step parts (ST1) and the second step parts (ST2) are disposed on a plane perpendicular to the axial direction.

5. The motor of claim 1, wherein a length of the joint in the axial direction is greater than a length of the flange (412) in the axial direction and smaller than a length of the main body (411) in the axial direction.

6. The motor of claim 1, wherein when viewed in the axial direction, a sum of an area of all the first step parts (ST1) and an area of all the second step parts (ST2) is smaller than a sum of an area of the flange (412).

7. The motor of claim 1, wherein:
the housing (400) further includes a second housing (420);
in a contact region between the first housing (410) and the second housing (420),
the first housing (410) includes a first coupling part (414); and
the second housing (420) includes a second coupling part (421) coupled to the first coupling part (414).

8. The motor of claim 1, wherein:
in the axial direction, an inner edge of the flange (412) have a "W' shape around the curved surface.

## Patentansprüche

1. Motor umfassend:
ein Gehäuse (400);
einen Stator (300), der in dem Gehäuse (400) angeordnet ist;
einen Rotor (200), der in dem Stator (300) angeordnet ist; und
eine Welle (100), die mit dem Rotor (200) gekoppelt ist,
wobei das Gehäuse (400) ein erstes Gehäuse (410) umfasst,
das erste Gehäuse (410) einen Hauptkörper (411), einen Flansch (412), und eine Verbindung umfasst, die in einer Axialrichtung zwischen dem Flansch (412) und dem Hauptkörper (411) angeordnet ist,
der Flansch (412) eine Vielzahl von Löchern (412a) umfasst,
die Verbindung erste Stufenteile (ST1) und zweite Stufenteile (ST2) umfasst, die in einer Radialrichtung weiter nach außen vorstehen als eine äußere Oberfläche des Hauptkörpers (411), und
die ersten Stufenteile (ST1) und die zweiten Stufenteile (ST2) in Bezug auf eine Referenzebene (T), die parallel zu einer Achse des Motors ist und durch ein Zentrum von einem der Löcher (412a) und ein Zentrum (C) des ersten Gehäuses (410) hindurchgeht, symmetrisch angeordnet sind,
wobei Formen und Größen des ersten Stufenteils (ST1) und des zweiten Stufenteils (ST2) gleich sind,
wobei die Verbindung ein vorstehendes Teil (P) umfasst, und das vorstehende Teil (P) eine konvexe Region und eine konkave Region umfasst, die in der Radialrichtung kontinuierlich angeordnet sind, und die konkave Region angeordnet ist, um dem Loch (412a) zu entsprechen, und
**dadurch gekennzeichnet, dass** die Verbindung eine Seitenwand (W) umfasst, welche die ersten Stufenteile (ST1) und die zweiten Stufenteile (ST2) mit dem Flansch (412) verbindet; und
die Seitenwand (W) gekrümmte Oberflächen umfasst, die zu dem Zentrum (C) des ersten Gehäuses (410) vorstehen,
wobei die gekrümmten Oberflächen angeordnet sind, um den Löchern (412a) zu entsprechen, und
wobei die Seitenwand (W) planare Oberflächen umfasst, die zwei benachbarte gekrümmte Oberflächen unter den gekrümmten Oberflächen verbinden, und
wobei die planaren Oberflächen von dem Zentrum des ersten Gehäuses (410) zurückgesetzt sind, und nicht koplanar mit einer inneren Oberfläche des Hauptkörpers (411) sind.

2. Motor nach Anspruch 1, wobei die Vielzahl von gekrümmten Oberflächen in Bezug auf das Zentrum (C) des ersten Gehäuses (410) rotationssymmetrisch angeordnet sind.

3. Motor nach Anspruch 1, wobei:
die Vielzahl von ersten Stufenteilen (ST1) in Bezug auf ein Zentrum (C) des Gehäuses (400) rotationssymmetrisch angeordnet sind; und
die Vielzahl von zweiten Stufenteilen (ST2) in Bezug auf das Zentrum (C) des Gehäuses (400) rotationssymmetrisch angeordnet sind.

4. Motor nach Anspruch 1, wobei die ersten Stufenteile (ST1) und die zweiten Stufenteile (ST2) auf einer zu der Axialrichtung senkrechten Ebene angeordnet sind.

5. Motor nach Anspruch 1, wobei eine Länge der Verbindung in der Axialrichtung größer als eine Länge des Flansches (412) in der Axialrichtung und kleiner als eine Länge des Hauptkörpers (411) in der Axialrichtung ist.

6. Motor nach Anspruch 1, wobei, in der Axialrichtung betrachtet, eine Summe einer Fläche von allen ersten Stufenteilen (ST1) und einer Fläche von allen zweiten Stufenteilen (ST2) kleiner als eine Summe einer Fläche des Flansches (412) ist.

7. Motor nach Anspruch 1, wobei:
das Gehäuse (400) ferner ein zweites Gehäuse (420) umfasst;
in einer Kontaktregion zwischen dem ersten Gehäuse (410) und dem zweiten Gehäuse (420),
das erste Gehäuse (410) ein erstes Kopplungsteil (414) umfasst; und
das zweite Gehäuse (420) ein zweites Kopplungsteil (421) umfasst, das mit dem ersten Kopplungsteil (414) gekoppelt ist.

8. Motor nach Anspruch 1, wobei:
in der Axialrichtung, eine innere Kante des Flansches (412) eine "W"-Form um die gekrümmte Oberfläche herum aufweist.

## Revendications

1. Moteur comprenant :
un carter (400) ;
un stator (300) disposé dans le carter (400) ;
un rotor (200) disposé dans le stator (300) ; et
un arbre (100) accouplé au rotor (200),
le carter (400) comprenant un premier carter (410),
le premier carter (410) comprenant un corps principal (411), une bride (412) et un joint disposé entre la bride (412) et le corps principal (411) dans une direction axiale,
la bride (412) comprenant une pluralité de trous (412a),
le joint comprenant des premières parties en gradin (ST1) et des deuxièmes parties en gradin (ST2) qui font saillie davantage vers l'extérieur qu'une surface extérieure du corps principal (411) dans une direction radiale, et
les premières parties en gradin (ST1) et les deuxièmes parties en gradin (ST2) étant disposées symétriquement par rapport à un plan de référence (T) parallèle à un axe du moteur et passant par un centre de l'un des trous (412a) et un centre (C) du premier carter (410),
les formes et dimensions de la première partie en gradin (ST1) et de la deuxième partie en gradin (ST2) étant identiques,
dans lequel le joint comprend une partie saillante (P), et la partie saillante (P) comprend une région convexe et une région concave qui sont disposées de manière continue dans la direction radiale et la région concave est disposée pour correspondre au trou (412a), et
**caractérisé en ce que** le joint comprend une paroi latérale (W) qui relie les premières parties en gradin (ST1) et les deuxièmes parties en gradin (ST2) à la bride (412) ; et
la paroi latérale (W) comprend des surfaces courbes faisant saillie vers le centre (C) du premier carter (410), les surfaces courbes étant disposées pour correspondre aux trous (412a), et
dans lequel la paroi latérale (W) comprend des surfaces planes reliant deux surfaces courbes adjacentes parmi les surfaces courbes, et
dans lequel les surfaces planes sont en retrait par rapport au centre du premier carter (410) et ne sont pas coplanaires avec une surface intérieure du corps principal (411).

2. Moteur selon la revendication 1, dans lequel la pluralité de surfaces courbes sont disposées de manière rotationnelle et symétrique par rapport au centre (C) du premier carter (410).

3. Moteur selon la revendication 1, dans lequel :
la pluralité de premières parties d'étagement (ST1) sont disposées de manière rotationnelle et symétrique par rapport à un centre (C) du carter (400) ; et
la pluralité de secondes parties d'étagement (ST2) sont disposées de manière rotationnelle et symétrique par rapport au centre (C) du carter (400).

4. Moteur selon la revendication 1, dans lequel les premières parties d'étage (ST1) et les deuxièmes parties d'étage (ST2) sont disposées sur un plan perpendiculaire à la direction axiale.

5. Moteur selon la revendication 1, dans lequel une longueur du joint dans la direction axiale est supérieure à une longueur de la bride (412) dans la direction axiale et inférieure à une longueur du corps principal (411) dans la direction axiale.

6. Moteur selon la revendication 1, dans lequel, vu dans la direction axiale, une somme d'une aire de toutes les premières parties en gradin (ST1) et d'une aire de toutes les secondes parties en gradin (ST2) est inférieure à une somme d'une aire de la bride (412).

7. Moteur selon la revendication 1, dans lequel :
le carter (400) comprend en outre un deuxième carter (420) ;
dans une région de contact entre le premier carter (410) et le deuxième carter (420),
le premier carter (410) comprend une première partie d'accouplement (414) ; et
le deuxième carter (420) comprend une deuxième partie d'accouplement (421) accouplée à la première partie d'accouplement (414).

8. Moteur selon la revendication 1, dans lequel :
dans la direction axiale, un bord intérieur de la bride (412) a une forme en « W » autour de la surface incurvée.
